(19) Europäisches Patentamt

European Patent Office

Office européen des brevets

(11) EP 1 106 388 B1

(12) FASCICULE DE BREVET EUROPEEN

(45) Date de publication et mention
de la délivrance du brevet:
**06.08.2003 Bulletin 2003/32**

(51) Int Cl.⁷: **B60B 3/04**

(21) Numéro de dépôt: **00126181.7**

(22) Date de dépôt: **30.11.2000**

(54) **Roue de véhicule utilitaire à valve débouchant à l'extérieur du disque**

Nutzfahrzeugrad mit einem aussen an der Radscheibe mündenden Ventil

Industrial vehicle wheel with a valve, which opens outside the disk

(84) Etats contractants désignés:
**AT BE CH CY DE DK ES FI FR GB GR IE IT LI LU MC NL PT SE TR**

(30) Priorité: **09.12.1999 FR 9915790**
**03.05.2000 FR 0005742**

(43) Date de publication de la demande:
**13.06.2001 Bulletin 2001/24**

(73) Titulaires:
• **Sociéte de Technologie Michelin**
**63000 Clermont-Ferrand Cedex 09 (FR)**
• **Michelin Recherche et Technique S.A.**
**1763 Granges-Paccot (CH)**

(72) Inventeurs:
• **Delacroix, Serge**
**63400 Chamalieres (FR)**
• **Giraud, Sylvain**
**63130 Royat (FR)**

(74) Mandataire: **Dequire, Philippe Jean-Marie Denis**
**Michelin & Cie,**
**Service SGD/LG/PI-LAD**
**63040 Clermont Ferrand Cedex 09 (FR)**

(56) Documents cités:
**EP-B- 0 701 911          FR-A- 2 744 069**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne les roues en tôle de véhicules utilitaires équipées de valves pour le gonflage des pneumatiques, en particulier celles équipées de jantes gorge circonférentielle de montage et dont la valve débouche à l'extérieur du disque de roue.

Un exemple de roue de ce type ayant les caractéristiques du préambule de la revendication 1 est décrit par le brevet EP 0 701 911 B1. Cette roue comprend un disque et une jante avec un crochet extérieur, un siège extérieur, un élément de sécurité, une première zone de liaison où est disposée un trou de valve, une seconde zone de liaison sensiblement cylindrique, une gorge de montage circonférentielle avec un flanc extérieur et un flanc intérieur, un siège intérieur et un crochet intérieur, la liaison entre le disque et la jante étant réalisée dans la seconde zone de liaison dont le diamètre est supérieur à celui de la gorge de montage, dans laquelle l'élément de sécurité est constitué d'un bossage circonférentiel ou "hump".

Cette roue a l'avantage d'avoir une valve qui ne pénètre pas dans l'espace intérieur du disque de la roue. Elle entraîne toutefois des difficultés pour les montages et les démontages des pneumatiques qu'elle est destinée à recevoir.

Lors du montage d'un pneumatique, après avoir introduit les deux bourrelets dans la gorge de montage, le bourrelet extérieur du pneumatique doit passer par-dessus le hump pour atteindre sa position sur le siège extérieur. En raison du diamètre élevé du hump, ce passage doit avoir lieu en plusieurs étapes successives. On fait passer en premier le bourrelet du pneumatique au-dessus de la zone du hump proche de la valve. Puis on gonfle le pneumatique et la pression interne assure le passage complet du bourrelet au-dessus du hump et le met en place sur le siège extérieur. Cette mise en pression de la cavité interne du pneumatique n'est pas possible lorsque le bourrelet extérieur n'a pas franchi le pied de valve. Il est donc nécessaire de définir un mode opératoire particulier pour ces roues.

Le franchissement en plusieurs étapes du hump peut aussi être la cause d'une mise en place irrégulière du bourrelet extérieur sur le siège extérieur de jante, cela peut entraîner un balourd en roulage.

Lors du démontage des pneumatiques, il faut aussi respecter un mode opératoire particulier avec des outils spécifiques pour pouvoir faire passer le bourrelet extérieur du pneumatique sans risquer de l'endommager par des efforts excessifs notamment lors du franchissement de la zone de la valve.

Ces problèmes sont très notablement améliorés par la roue selon l'invention.

Dans ce qui suit, on entend par "roue de véhicule utilitaire" une de diamètre supérieur ou égal à 17,5 pouces (444,5 mm). On entend par "direction axiale" une direction parallèle à l'axe de rotation de la roue.

La roue selon l'invention comprend :

- un disque, et
- une jante avec un crochet extérieur, un siège extérieur, un élément de sécurité, une première zone de liaison dans laquelle est disposé un trou de valve, une seconde zone de liaison, une gorge de montage circonférentielle avec un flanc extérieur et un flanc intérieur, un siège intérieur et un crochet intérieur, la liaison entre ledit disque et ladite jante étant réalisée dans ladite seconde zone de liaison dont le diamètre est supérieur à celui de ladite gorge de montage.

Cette roue est caractérisée en ce que l'élément de sécurité est constitué d'une paroi cylindrique ou ledge de diamètre identique à celui de l'extrémité intérieure du siège extérieur et en ce que, $\Phi$ étant le diamètre de la roue et p la longueur axiale de la paroi cylindrique :

$$\frac{p}{\Phi} \times 1000 \leq 35$$

Selon un mode de réalisation avantageux :

$$14 \leq \frac{p}{\Phi} \times 1000 \leq 26$$

Les roues selon l'invention ont de préférence une largeur supérieure ou égale à 7.5 (152,4 mm) pouces.

Cette roue a l'avantage de présenter un dispositif anti-décoincement du bourrelet extérieur du pneumatique appelé ledge tout aussi efficace que le hump de la roue précédente en dépit de sa longueur axiale très faible. Ce ledge procure aussi à cette roue un avantage notable lors du montage d'un pneumatique parce que le bourrelet extérieur peut aisément franchir ce ledge en une seule opération. Cela facilite aussi une bonne mise en place du bourrelet sur le siège extérieur. Enfin, lors du démontage, on constate que les efforts nécessaires pour décoincer les bourrelets des sièges et pour les faire tomber dans la gorge de montage sont très notablement réduits. Cela permet de réduire d'autant les risques d'endommagement du pneumatique.

Un mode de réalisation de l'invention est maintenant décrit, à titre non limitatif, avec l'aide du dessin annexé suivant :

- la figure 1 présente une coupe axiale passant par le trou de valve d'une roue décrite dans le brevet EP 0 701 911 B1 ;
- la figure 2 est une coupe similaire d'un mode de réalisation d'une roue selon l'invention ; et
- la figure 3 est une coupe d'une roue similaire à la roue de la figure 2 passant par le trou de valve.

La figure 1 présente une coupe d'une roue 1 en tôle, telle que décrite dans le brevet EP 0 701 911 B1.

Cette roue 1 pour véhicule utilitaire, en tôle d'acier et en une seule pièce, est composée d'un disque 2, d'une jante 3 et d'une valve (non représentée). La jante 3 comprend une gorge centrale de montage 31, deux sièges de bourrelet, côté extérieur 32 et côté intérieur 33, et deux crochets 34 et 35. Les sièges sont usuellement inclinés à 15° relativement à la direction axiale. La gorge 31 est reliée au siège 33 du côté opposé au disque 2 par un flanc 40. Du côté du disque 2 (ou côté extérieur), à partir de l'extrémité intérieure du siège extérieur 32, on a un hump 36, une première zone de liaison 37, une seconde zone de liaison 38 et un flanc 39 relié à la gorge de montage 31. La liaison disque-jante est réalisée par soudure de l'extrémité 21 du disque 2 sur la paroi radialement intérieure de la seconde zone de liaison 38. Le trou de valve 41 est situé entre le hump 36 et la seconde zone de liaison disque/jante 39 dans la paroi de la première zone de liaison 37.

Le diamètre du hump est naturellement supérieur à celui de l'extrémité intérieure du siège extérieur 32. Il en résulte, comme expliqué précédemment, certaines difficultés de montage et de démontage des pneumatiques destinés à équiper cette roue.

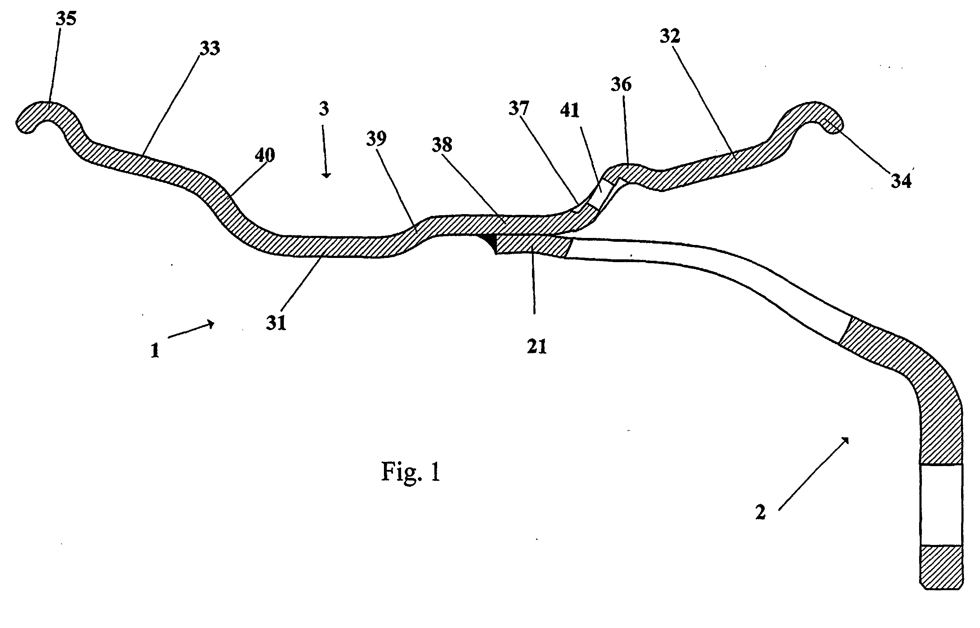

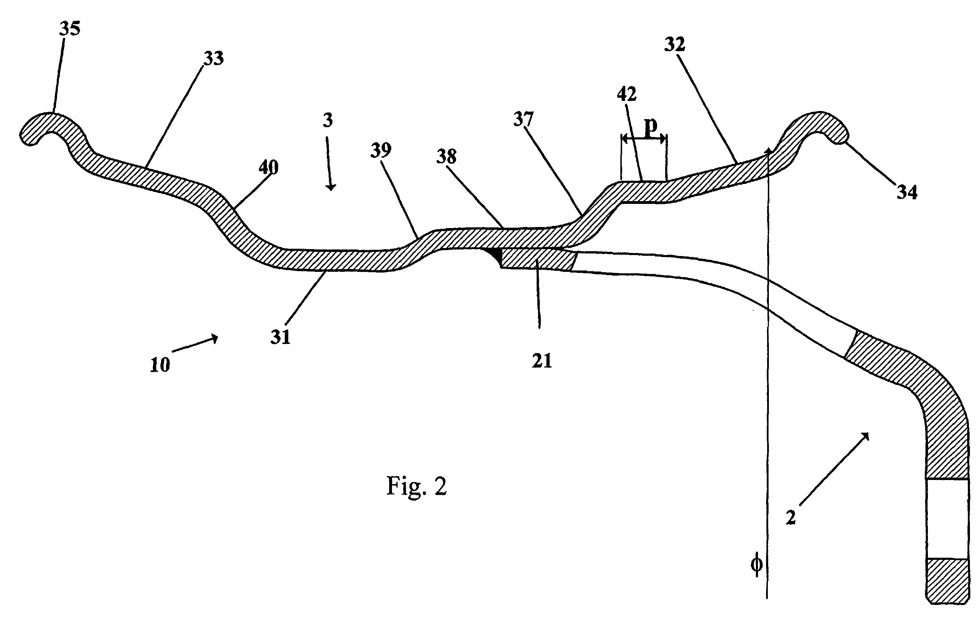

La figure 2 présente une roue 10 selon l'invention. Cette roue présente, à partir de l'extrémité intérieure du siège extérieur 32, une paroi cylindrique ou ledge 42 suivie d'une première zone de liaison ou flanc 37 dans lequel est disposé le trou de valve. La paroi 42 peut aussi être très légèrement conique. On a ensuite la seconde zone de liaison 38 suivie du flanc extérieur 39 de la gorge de montage 31. La seconde zone de liaison 38 est aussi la zone d'accrochage du disque à la jante. Cette zone 38 est usuellement sensiblement cylindrique, elle peut aussi avoir une conicité plus ou moins marquée, pouvant atteindre une dizaine de degrés relativement à la direction axiale. La longueur axiale de ce ledge est telle que, $\Phi$ étant le diamètre normalisé selon l'ETRTO de la roue, et p la longueur axiale de la paroi cylindrique 42, on a :

$$\frac{p}{\Phi} \times 1000 \leq 35$$

et de préférence :

$$14 \leq \frac{p}{\Phi} \times 1000 \leq 26$$

Dans le cas d'une roue de diamètre 22,5 pouces, soit 571,5 mm, ces relations deviennent : p est inférieur à 20 mm et de préférence compris entre 8 et 15 mm.

Ces longueurs de ledge sont très notablement inférieures à celles usuellement pratiquées pour des roues similaires qui sont de l'ordre de 35 à 40 mm au minimum. Les longueurs préconisées varient en fonction du diamètre de la roue concernée.

L'inclinaison des sièges de la jante selon l'invention est aussi usuellement de 15° relativement à la direction axiale. L'invention pourrait aussi cependant s'appliquer à des roues comportant des sièges inclinés à 5°.

L'emploi d'un ledge selon les dimensions ainsi prévues procure cependant aux roues selon l'invention une performance anti-décoincement tout à fait comparable à celui du hump de la roue précédente.

Des roues similaires à celle de la figure 2, de diamètre 22,5 pouces comportant une paroi cylindrique de longueur variable (40, 30, 20 et 13 mm) ont subi le test suivant.

Après avoir monté un pneumatique à sec sur la roue à tester et gonflé l'ensemble monté à une pression de gonflage donnée, on met en place l'ensemble monté (roue et pneumatique) à la position avant-gauche d'un véhicule utilitaire. La charge par essieu de ce camion étant, pour des roues de diamètre 22,5 pouces de 6 tonnes. Le test se déroule sur une piste en béton de diamètre 60 m. Le véhicule rentre sur la piste à une vitesse de 50 km/h et parcourt deux tours de piste à 40 km/h.

Après ces deux tours, le test est considéré positif si le pneumatique est resté sur sa jante. On mesure après le test la pression de gonflage du pneumatique.

Les pressions de gonflage minimales de test sont 1,8 bar.

Toutes les roues testées ont passé avec succès ce test anti-décoincement.

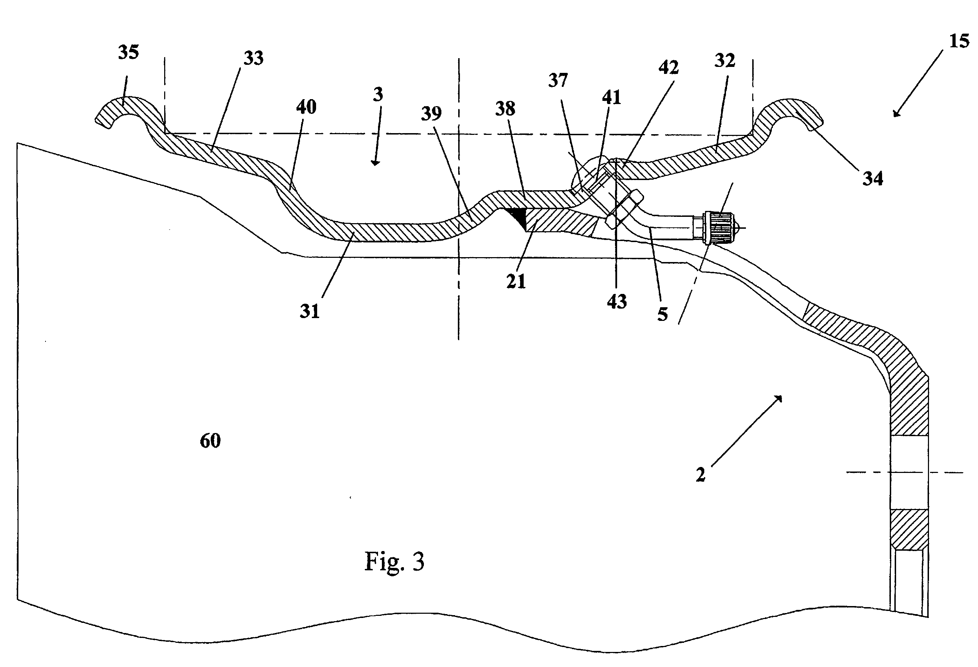

La figure 3 présente une roue 15 similaire à la roue 10 de la figure 2. Cette coupe est réalisée dans la zone de la valve 5. Cette zone subit une opération de poinçonnage du flanc 37 pour obtenir deux parois planes de part et d'autre du trou de valve nécessaires pour un bon maintien de l'étanchéité de la cavité interne de la roue. On constate que cette opération provoque une déformation localisée du flanc au droit de la valve qui entraîne l'apparition d'une protubérance de hauteur radiale légèrement supérieure à celle du reste de la paroi cylindrique. Cette surépaisseur est cependant très ponctuelle et n'a pas d'incidence notable sur les opérations de montage et de démontage des pneumatiques sur cette roue. Cette figure 3 illustre aussi l'encombrement des organes de frein 60 disposés dans l'espace intérieur du disque 2.

Les roues selon l'invention peuvent être réalisées en tôle d'acier ou d'aluminium, notamment. Le domaine d'application de ces roues correspond aux roues de largeur supérieure ou égale à 7,5 pouces. En effet, avec des roues de largeur inférieure, il devient difficile de disposer d'une place suffisante pour disposer la valve dans l'espace disponible du flanc 37.

## Revendications

**1.** Roue (1) pour véhicule utilitaire, en tôle et en une seule pièce, comprenant

- un disque (2), et
- une jante (3) avec un crochet extérieur (34), un siège extérieur (32), un élément de sécurité (42), une première zone de liaison (37) dans laquelle est disposé un trou de valve (41), une seconde zone de liaison (38), une gorge de montage (31) circonférenrielle avec un flanc extérieur (39) et un flanc intérieur (40), un siège intérieur (33) et un crochet intérieur (35), la liaison entre ledit disque (2) et ladite jante (3) étant réalisée dans ladite seconde zone de liaison (38) dont le diamètre est supérieur à celui de ladite gorge de montage (31),

**caractérisée en ce que** ledit élément de sécurité (42) est constitué d'une paroi cylindrique de diamètre identique à celui de l'extrémité intérieure dudit siège extérieur (32) et **en ce que**, Φ étant le diamètre de ladite roue (1) et p la longueur axiale de ladite paroi cylindrique (42):

$$\frac{p}{\Phi} \times 1000 \leq 35$$

**2.** Roue selon la revendication 1, telle que

$$14 \leq \frac{p}{\Phi} \times 1000 \leq 26$$

**3.** Roue selon l'une des revendications 1 à 3, telle que l'inclinaison des sièges (32, 33) est de 15° relativement à la direction axiale.

**4.** Roue selon l'une des revendications 1 à 4, telle que la largeur de ladite roue (1) est supérieure ou égale à (7.5) 152,4 mm pouces.

**Patentansprüche**

**1.** Rad (1) für Nutzfahrzeug, aus Blech und einstückig, das die folgenden Merkmale aufweist:

- eine Scheibe (2), und
- eine Felge (3) mit einer äußeren Krempe (34), einem äußeren Sitz (32), einem Sicherheitselement (42), einer ersten Verbindungszone (37), in der ein Loch (41) für ein Ventil angeordnet ist, einer zweiten Verbindungszone (38), einer sich in Umfangsrichtung erstreckenden Montageauskehlung (31) mit einer äußeren Flanke (39) und einer inneren Flanke (40), einem inneren Sitz (33) und einer inneren Krempe (35), wobei die Verbindung zwischen der genannten Scheibe (2) und der genannten Felge (3) in der genannten zweiten Verbindungszone (38) hergestellt ist, deren Durchmesser größer ist als der der genannten Montagenut (31),

**dadurch gekennzeichnet, daß** das genannte Sicherheitselement (42) von einer zylindrischen Wand mit einem Durchmesser gebildet ist, der identisch zu dem des inneren Endes des äußeren Sitzes (32) ist, und daß, wobei Φ der Durchmesser des Rades (1) und p die axiale Länge der zylindrischen Wand (42) ist, gilt:

$$p/\Phi \text{ x } 1000 \leq 35.$$

**2.** Rad nach Anspruch 1, derart, daß

$$14 \leq p/\Phi \text{ x } 1000 \leq 26.$$

**3.** Rad nach einem der Ansprüche 1 oder 2, worin die Neigung des Sitzes (32, 33) relativ zur Axialrichtung 15° beträgt.

**4.** Rad nach einem der Ansprüche 1 bis 3, worin die Breite des genannten Rades (1) größer oder gleich 7,5 Zoll (152,4 mm) ist.

**Claims**

**1.** Wheel (1) for a commercial vehicle, made of sheet metal and in a single piece, comprising:

- a disk (2), and
- a rim (3) with an outer hook (34), an outer seat (32), a safety element (42), a first connecting area (37)in which a valve hole (41) is placed, a second connecting area (38), a circumferential mounting groove (31) with an outer flange (39) and an inner flange (40), an inner seat (33) and an inner hook (35), the connection between said disk (2) and said rim (3) being made in said second connecting area (38), the diameter of which is greater than that of said mounting groove (31),

**characterized in that** said safety element (42)consists of a cylindrical wall of diameter identical to that of the inner end of said outer seat (32) and **in that**, φ being the diameter of said wheel (1) and p the axial length of said cylindrical wall (42):

$$p/\phi \times 1000 \leq 35$$

**2.** Wheel according to Claim 1, such that:

$$14 \leq p/\phi \times 1000 \leq 26$$

**3.** Wheel according to one of Claims 1 and 2, such that the inclination of the rim seats (32, 33) is 15° relative to the axial direction.

4. Wheel according to one of Claims 1 to 3, such that the width of said wheel (1) is greater than or equal to 152;4 mm (7.5 inches).

Fig. 1

Fig. 2

Fig. 3